# FASCICULE DE BREVET EUROPEEN

(11) **EP 3 824 065 B1**
(45) Date de publication et mention de la délivrance du brevet: **04.10.2023**
(21) Numéro de dépôt: 19753166.8
(22) Date de dépôt: 16.07.2019
(51) Int. Cl.: C12G 1/028, C12H 1/22, C12G 1/02

(54) **CONTENANT POUR LIQUIDE ALIMENTAIRE CONTRÔLÉ EN TEMPÉRATURE**
GETRÄNKEBEHÄLTER MIT TEMPERATURKONTROLLE
TEMPERATURE-CONTROLLED BEVERAGE CONTAINER

(30) Priorité: 17.07.2018 FR 1856593
(43) Date de publication de la demande: 26.05.2021
(73) Titulaire: Galileo SAS, 16200 Gondeville (FR)
(72) Inventeur: REBOREDO, Alejandro, MENDOZA, 5500 (AR); DEBONO, Didier, Vina del Mar 2520000 (CL); VERDIER, Benoît, 16200 GONDEVILLE (FR)
(74) Mandataire: Plasseraud IP
(86) Numéro de dépôt international: PCT/FR2019/051781
(87) Numéro de publication internationale: WO 2020/016519

(56) Documents cités:
- WO-A2-03/079826
- DE-A1- 3 434 170
- FR-A1- 2 811 068
- FR-A1- 2 982 275
- FR-A1- 3 019 831
- FR-A3- 2 755 974

## Description

### ARRIERE-PLAN DE L'INVENTION

### Domaine de l'invention

La présente invention a trait à un contenant destiné à contenir des produits liquides tels que du vin ou des spiritueux, ou encore granulaires tels que des denrées alimentaires.

Elle concerne en particulier un tel contenant équipé d'un système de contrôle en température.

### Arrière-plan technologique

Des cuves pour la vinification, l'élevage et le stockage du vin sont connues.

FR3019831 concerne une cuve de vinification comprenant un corps creux monolithique qui est en forme d'ovoïde inversée. WO 03/079826 divulgue un dispositif pour la production de produits alimentaire et/ou de boissons alcoolisées et/ou contenant de l'acide lactique comprenant une cuve de fermentation. FR2811068 divulgue un dispositif de refroidissement/réchauffage d'un liquide alimentaire.

Ces cuves peuvent être réalisées en acier inoxydable, en béton, en plastique ou dans des bois nobles tels que le chêne, afin de conférer au vin, dans ce dernier cas, des qualités gustatives durant la phase d'élevage.

Il est connu que les cuves en béton présentent l'avantage d'offrir une bonne inertie thermique. Elles autorisent ainsi un maintien des températures stables dans le vin sans requérir de dépenses énergétiques élevées.

Il est également moins onéreux que d'autres matériaux utilisés dans la fabrication de cuve, tels que des bois nobles ou l'inox.

En outre, le béton est un matériau neutre par excellence pour le liquide alimentaire avec lequel il est en contact prolongé. Il est donc particulièrement prisé lorsqu'aucune influence directe de la cuve sur le liquide alimentaire n'est recherchée lors de son séjour dans celle-ci.

Le béton est également très résistant et adapté au vieillissement de la cuve.

On connaît également des cuves en béton de forme sphérique ou ovoïde.

En plus d'un aspect esthétique indéniable, la forme sphérique d'une cuve présente plusieurs avantages.

Elle favorise des mouvements de convection dans la cuve, ce qui assure une homogénéisation permanente de son contenu ainsi qu'une distribution égale des températures.

Toutefois, il est connu que la température joue un rôle important dans les processus physico-chimiques impliqués dans l'élaboration de vin ou encore dans le stockage de vin.

Des variations dans la température extérieure à la cuve peuvent ainsi avoir des influences négatives, lorsque la température du liquide alimentaire contenu dans celle-ci doit rester constante durant certaines étapes clés du processus.

A titre illustratif, une telle stabilité en température ou tout au moins le maintien d'une température strictement supérieure à 20°C, est nécessaire pour réaliser la fermentation malolactique.

C'est ainsi, par exemple, que des éléments chauffants appelés thermoplongeurs, sont utilisés et plongés directement dans le liquide contenu dans une cuve pour conserver ou activer des processus biochimiques (fermentations) et physico-chimiques.

On constate néanmoins que ces cuves ainsi contrôlées en température n'offrent pas une distribution homogène de température dans celles-ci.

De plus, lorsque la cuve présente un volume important, la régulation en température de l'entier volume peut prendre du temps.

Des gradients de température sont ainsi générés, lesquels peuvent provoquer des altérations des liquides contenus dans ces cuves.

On connaît encore des procédés de régulation, selon lesquels on refroidit ou on chauffe le volume d'une pièce dans laquelle une ou plusieurs cuves sont placées pour réguler la température de leur contenu.

Néanmoins, ces procédés de contrôle en température conduisent à des coûts opérationnels élevés.

Il existe donc un besoin pressant pour un contenant dont la conception originale assure un contrôle et une régulation efficace de la température du liquide alimentaire contenu dans ce contenant.

### Objet de l'invention

La présente invention vise à pallier les inconvénients de l'art antérieur en proposant un contenant pour liquide alimentaire, simple dans sa conception et dans son mode opératoire, économique et permettant de contrôler efficacement la température de son contenu.

Un objectif de la présente invention est également un tel contenant assurant une température plus homogène de son contenu pour ne pas altérer ce dernier.

Un autre objectif de la présente invention est un tel contenant dont le contenu peut être refroidi ou chauffé en fonction des nécessités.

### BREVE DESCRIPTION DE L'INVENTION

A cet effet, l'invention concerne un contenant pour liquide alimentaire, notamment pour l'élaboration et l'élevage de vin et de spiritueux, ce contenant comportant un ou plusieurs tubes pour la circulation d'un fluide de refroidissement et/ou d'un fluide chauffant.

Selon l'invention,
- ce contenant comportant un corps de contenant qui est sphérique ou ovoïde, ledit corps comprenant une première moitié de corps inférieure et une seconde moitié de corps supérieure,
- chaque moitié de corps comprend un tube pour la circulation d'un fluide de refroidissement et/ou d'un fluide chauffant, chaque tube comprenant une extrémité d'entrée et une extrémité de sortie, au moins une desdites extrémités formant saillie de ladite moitié de corps correspondante, et
- les extrémités d'entrée desdits tubes sont reliées à un même point de puisage de fluide.

Le système de contrôle et de régulation en température de ce contenant comporte donc un seul point d'alimentation en fluide de refroidissement et/ou en fluide chauffant.

Selon une première configuration de l'alimentation en fluide dudit contenant, dite de montage en parallèle, l'extrémité d'entrée du tube de chaque moitié de corps étant placée en saillie de sa moitié de corps correspondante, ces extrémités d'entrée sont reliées à un même point de puisage en fluide pour recevoir un même fluide.

On s'assure ainsi avantageusement d'une même température de fluide en entrée de chaque tube ainsi que d'un temps de distribution du fluide identique, ou sensiblement identique, de manière à limiter l'apparition de zone inhomogène en température dans le contenant.

De manière avantageuse, les extrémités de ces tubes sont agencées pour former saillie du corps de contenant en des points qui sont proches l'un de l'autre. On limite ainsi une éventuelle modification de la température du fluide par échange avec la température extérieure de la pièce dans laquelle le contenant est placé. Par ailleurs, ces extrémités peuvent également être revêtues d'éléments d'isolation thermique.

Selon une deuxième configuration de l'alimentation en fluide dudit contenant, dite de montage en série, l'extrémité d'entrée du tube d'une première moitié de corps est reliée à l'extrémité de sortie du tube de l'autre moitié de corps du contenant de sorte que ces tubes forment une continuité de tube entre les deux moitiés de corps pour la circulation d'un fluide provenant d'un même point de puisage en fluide d'abord dans la première moitié de corps puis dans l'autre moitié de corps.

Chaque tube peut être placé au moins en partie sur la surface externe de sa moitié de corps correspondante et/ou être intégrés au moins en partie dans l'épaisseur de sa moitié de corps correspondante. Selon un mode de réalisation, chaque moitié de corps comprend un tube pour la circulation d'un fluide de refroidissement et/ou d'un fluide chauffant, chaque tube comprenant une extrémité d'entrée et une extrémité de sortie, lesquelles font saillie de ladite moitié de corps correspondante.

Bien entendu, au moins une moitié de corps du contenant peut comporter plusieurs tubes pour la circulation d'un fluide caloporteur.

Dans le cas d'un contenant sphérique, chaque moitié de corps est en conséquence un hémisphère.

Dans différents modes de réalisation particuliers de ce contenant, chacun ayant ses avantages particuliers et susceptibles de nombreuses combinaisons techniques possibles :
- ledit corps de contenant étant sphérique, l'agencement et la configuration du ou des tubes pour la circulation d'un fluide de refroidissement ou chauffant dans chaque hémisphère, ou moitié de corps, est identique.

Une symétrie dans le mécanisme de refroidissement ou de chauffage entre les deux moitiés de corps, ou demi-corps, est ainsi assurée ce qui permet, lorsque les extrémités d'entrée des tubes sont reliées à un même point de puisage en fluide de refroidissement ou chauffant, d'assurer une homogénéité de température dans l'ensemble du contenant.

Selon un mode de réalisation particulier, chacun de ces tubes est un serpentin de manière à optimiser au mieux l'échange thermique entre le fluide de refroidissement ou chauffant et la paroi de la moitié de corps de contenant correspondant. Les écarts thermiques entre les deux moitiés de corps sont ainsi minimisés.
- l'extrémité de sortie de chaque tube de la moitié de corps supérieure est directement reliée à l'extrémité d'entrée d'un tube correspondant de la moitié de corps inférieure de sorte que le corps de contenant est refroidi ou chauffé par le même fluide circulant dans ces tubes ainsi connectés.

On forme ainsi un circuit unique et continu entre les deux moitiés de corps de contenant.

Un gradient de température entre les deux moitiés de corps peut alors être généré lequel va renforcer par convection les mouvements du liquide contenu dans le contenant. Le corps de contenant ayant une forme sphérique, ces mouvements de convention sont de plus entretenus par la forme du contenant.

De manière avantageuse, lorsque le liquide contenu dans le contenant est du vin, ces mouvements de convection entraînent les lies qui sont remis en suspension.
- le corps de contenant pour liquide alimentaire étant une sphère, le ou les tubes pour la circulation d'un fluide de refroidissement ou chauffant des deux moitiés de corps sont identiques et sont agencés de manière symétrique entre ces deux moitiés de corps, ou hémisphères. Alternativement, les moitiés de corps du contenant étant différents dans leur forme, la configuration et l'agencement des tubes dans les deux demi-corps sont définis de sorte que la puissance utile de refroidissement ou de chauffage dans chaque moitié de corps est identique ou sensiblement identique.

- chaque moitié de corps comporte un seul tube pour la circulation d'un fluide de refroidissement et/ou d'un fluide chauffant. De préférence, ces tubes sont identiques.
- chaque tube est enroulé en spirale sur sa moitié de corps correspondante,
- ledit contenant étant sphérique, les extrémités d'entrée et de sortie de chaque tube sont placées au niveau de la section équatoriale de sa moitié de corps, ou hémisphère, correspondante,
- lesdits tubes sont intégrés dans l'épaisseur du corps du contenant,
- lesdits tubes sont agencés sur le corps du contenant pour assurer une température homogène de celui-ci.

Ces tubes sont ainsi répartis de manière uniforme sur les deux moitiés de corps dudit contenant pour assurer une température la plus homogène possible en tout point du corps du contenant.
- ce contenant comporte un ou plusieurs capteurs de température intégrés dans l'épaisseur de son corps de contenant,
- ledit corps de contenant comportant une paroi intérieure délimitant le volume de stockage dudit contenant et une paroi périphérique externe, ladite première moitié de corps inférieure et ladite seconde moitié de corps supérieure sont superposées et assemblées pour fermer ledit corps de contenant, chaque moitié de corps comprenant une surface d'assemblage avec l'autre moitié de corps, lesdites surfaces d'assemblage étant placées en regard l'une de l'autre, lesdites surfaces d'assemblage comportant au moins :
- des premières surfaces d'assemblage placées du côté de ladite paroi intérieure, lesdites premières surfaces présentant des profils conjugués l'un de l'autre pour assurer un contact continu entre lesdites premières surfaces, et
- lesdites premières surfaces d'assemblage étant prolongées en allant vers l'extérieur dudit contenant par des secondes surfaces d'assemblage configurées pour définir entre elles, un espace intérieur débouchant ou non sur ladite paroi périphérique externe.

De préférence, une colle d'assemblage telle qu'une colle apte au contact alimentaire, est disposée dans cet espace intérieur.

Alternativement, un élément d'étanchéité peut être placé dans cet espace intérieur. Eventuellement l'espace intérieur est adapté à la forme de l'élément d'étanchéité tel qu'une bague d'étanchéité. A titre d'exemple, cet espace intérieur présente une forme rectangulaire en coupe ou section transversale du contenant.

A titre d'exemple, le corps du contenant étant sphérique, chaque moitié de corps a donc une forme hémisphérique et ces surfaces d'assemblage sont annulaires.
- une première surface d'une première moitié de corps est en creux ou en retrait par rapport à sa seconde surface tandis que la première surface de l'autre moitié de corps est en saillie par rapport à sa seconde surface, la première surface en saillie ayant un profil conjugué de celui de ladite première surface en creux de manière à coopérer avec cette première surface en creux pour l'assemblage desdites moitiés de corps,
- lesdites premières surfaces sont en coupe, ou section, transversale dudit contenant, en forme de marche ou de forme ondulée,
- lesdites surfaces d'assemblage sont configurées de sorte qu'au moins les parois intérieures desdites moitiés de corps sont affleurantes de manière à assurer la continuité de ladite paroi intérieure dudit contenant.

De manière avantageuse, cette paroi intérieure est continue de sorte qu'elle ne présente pas de relief de surface susceptible de constituer une surface d'accroche difficile à nettoyer pour la souillure. Il est en effet nécessaire d'enlever cette souillure efficacement pour éviter toute prolifération bactérienne susceptible de conférer un mauvais goût au produit liquide contenu dans le contenant. Une meilleure hygiène du contenant est ainsi assurée.

De manière préférentielle, ce contenant comporte deux moitiés de corps de contenant assemblées entre elles, chaque moitié de corps étant d'une seule pièce.

Le corps du contenant résulte donc de l'assemblage de deux moitiés de corps qui sont, par exemple, des hémisphères dans le cas d'un contenant de forme sphérique.

Bien que chaque moitié de corps est, de préférence, d'une seule pièce, ou encore d'un seul tenant, afin d'assurer une parfaite étanchéité, l'invention n'est pas limitée à ce mode de réalisation. Chaque moitié de corps peut en effet résulter lui-même de l'assemblage de sous-ensembles, par exemple de quarts de moitié de contenant.

De préférence, cette première moitié de corps et cette seconde moitié de corps du contenant qui sont superposées pour leur assemblage, sont configurées pour assurer un assemblage par engagement par translation.

Avantageusement, lorsque les deux moitiés de corps sont assemblées pour former le contenant, un appui d'une première surface d'une première moitié de corps sur la première surface de l'autre moitié de corps est obtenu, cette surface de contact continu étant placée côté intérieur au contenant pour former une barrière limitant le contact colle ou bague d'étanchéité / vin.
- ce contenant est en béton,
- lesdits tubes sont en polyéthylène réticulé (P.E.R).

L'utilisation de ce matériau pour la réalisation des tubes permet d'améliorer le transfert thermique.
- ce contenant comporte un trou d'homme dans sa moitié de corps supérieure et une ouverture de décharge dans sa moitié de corps inférieure, lesdits tubes entourant ledit trou et ladite ouverture.

La présente invention concerne également un ensemble comprenant un contenant tel que décrit précédemment et un socle pour supporter le corps dudit contenant, ce socle ayant une section transversale triangulaire.

Ce socle comporte une forme évasée, sa base ou partie inférieure triangulaire se prolongeant vers son extrémité supérieure par une forme pyramidale tronquée.

Alternativement, la présente invention concerne aussi un ensemble pivotant comprenant :
- un contenant tel que décrit précédemment,
- un dispositif d'entraînement en rotation de ce contenant,
- un ou plusieurs éléments de guidage en rotation d'au moins un dispositif de couplage solidaire de la paroi périphérique externe du corps de ce contenant et
- une base pour supporter en rotation ledit contenant et recevoir ledit au moins un dispositif d'entraînement en rotation.

De manière avantageuse, chaque dispositif de couplage comprend un anneau de prise et un bol central solidaire de cet anneau de prise, ce bol central comportant une portion d'assemblage avec la paroi périphérique externe du corps de contenant, ladite portion d'assemblage comprenant des éléments de centrage avec ou étant configurée pour épouser la portion de ladite paroi périphérique externe sur laquelle elle prend appui, deux dispositifs de couplage montés de part et d'autre dudit corps définissant un axe de rotation dudit contenant coïncidant avec le centre de chaque anneau de prise, ledit contenant comprenant une ouverture de décharge agencée sur ledit corps de sorte qu'au moins une partie du liquide contenu dans ledit contenant puisse être retiré lorsque ledit contenant est basculé autour dudit axe de rotation.

A titre d'exemple, ce contenant comporte deux dispositifs de couplage montés de part et d'autre dudit corps en étant agencés pour définir un axe horizontal ou sensiblement horizontal.

Selon un mode de réalisation de cet ensemble pivotant, ce dispositif d'entraînement comprend au moins une roue d'entraînement rotative comportant une gorge pour recevoir au moins le bord périphérique d'un anneau de prise et une unité motrice pour entraîner en rotation ladite roue d'entraînement rotative.

Selon un autre mode de réalisation de cet ensemble pivotant, le bord périphérique d'un anneau de prise comprenant un engrenage annulaire, ledit dispositif d'entraînement comprend un engrenage complémentaire coopérant avec l'engrenage annulaire dudit anneau de prise pour l'entraînement en rotation de ce dernier, ledit engrenage annulaire étant solidaire d'un arbre d'entraînement actionné par une unité motrice ou une manivelle.

Selon encore un autre mode de réalisation de cet ensemble pivotant, lesdits éléments de guidage en rotation sont choisis dans le groupe comprenant des roues rotatives comportant une gorge pour recevoir le bord périphérique d'un anneau de prise, des roues pleines rotatives et des combinaisons de ces éléments.

### BREVE DESCRIPTION DES DESSINS

D'autres avantages, buts et caractéristiques particulières de la présente invention ressortiront de la description qui va suivre, faite, dans un but explicatif et nullement limitatif, en regard des dessins annexés, dans lesquels:
- la Figure 1 est une vue en perspective d'une cuve en béton sphérique selon un mode de réalisation particulier de la présente invention, un circuit de contrôle en température du contenu de cette cuve étant montré par transparence ;
- la Figure 2 est une vue côté de la cuve en béton sphérique de la Fig. 1 ;
- la Figure 3 est une autre vue en perspective de la cuve en béton sphérique de la Fig. 1 ;
- la Figure 4 est vue en perspective du socle de la cuve en béton sphérique de la Fig. 1 ;
- la Figure 5 est une représentation schématique partielle d'une cuve en béton sphérique selon un autre mode de réalisation de la présente invention ;

### DESCRIPTION DETAILLEE DE MODE DE REALISATION DE L'INVENTION

Tout d'abord, on note que les figures ne sont pas à l'échelle.

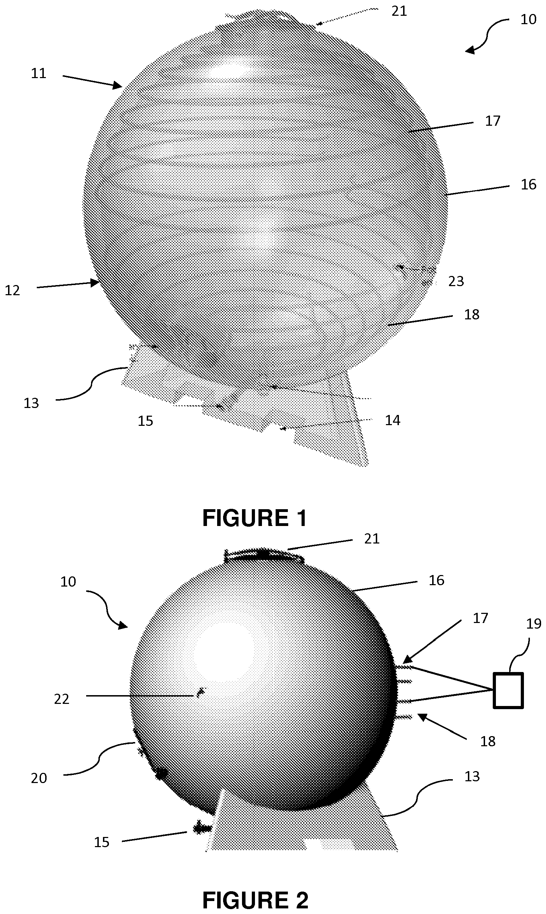

En relation avec les Figures 1 à 4, il est décrit une cuve 10 sphérique en béton selon un mode de réalisation particulier de la présente invention. Cette cuve béton sphérique 10 est avantageusement destinée à l'élaboration et à l'élevage de vin et de spiritueux.

Cette cuve 10 comporte un corps creux de cuve formé par l'assemblage de deux hémisphères 11, 12 en béton. Chaque hémisphère 11, 12 est d'une seule pièce afin de garantir une bonne étanchéité à cette cuve.

A titre purement illustratif, cette cuve 10 présente un volume nominal de 1500 L, une épaisseur de paroi de cuve de l'ordre de 8 cm pour un poids à vide de 1170 Kg.

Le corps de cette cuve est supporté par un socle 13. Ce socle 13 creux présente une base, ou partie inférieure, de forme triangulaire se prolongeant vers son extrémité supérieure par une forme pyramidale tronquée de sorte que cette dernière coïncide avec la forme sphérique de la cuve 10. Ce socle 13 creux qui est ici réalisé en béton armé, est particulièrement résistant et stable. La base de ce socle 13 présente des évidements 14 pour recevoir les fourches d'une unité de transport telle qu'un transpalette. Ce socle 13 présente également une découpe pour le passage d'un robinet de soutirage avec une ou plusieurs vannes 15 de vidange de la cuve béton sphérique 10.

Le corps de cette cuve 10 présente une paroi intérieure délimitant un espace de réception de vin ou de spiritueux, cet espace de réception ayant une forme générale sphérique. Afin de favoriser le mouvement du liquide dans la cuve 10, cette paroi intérieure est lisse. La paroi périphérique externe 16 de cette cuve 10 est sphérique également.

Chaque moitié de corps 11, 12 de forme hémisphérique comporte au niveau de sa section équatoriale une surface d'assemblage avec l'autre moitié de corps, laquelle est dirigée vers l'extérieur de sorte que les moitiés de corps 11, 12 étant superposées, ces surfaces d'assemblage autorisent un assemblage étanche de celles-ci. Ces surfaces d'assemblage visent également à faciliter l'assemblage par emboitement des deux moitiés de corps 11, 12 pour former la cuve béton sphérique 10. Cet assemblage des deux moitiés de corps 11, 12 au niveau de leur section équatoriale est étanche.

Cette cuve 10 comporte également des tubes 17, 18 pour la circulation d'un fluide froid et/ou d'un fluide chaud qui sont intégrés dans l'épaisseur des moitiés de corps 11, 12.

Chaque moitié de corps, ou hémisphère, 11, 12 comporte ici un seul tube 17, 18 enroulé en spirale. Chaque tube 17, 18 entre et sort du corps de cuve 10 au niveau de la section équatoriale de son hémisphère 11, 12 correspondant.

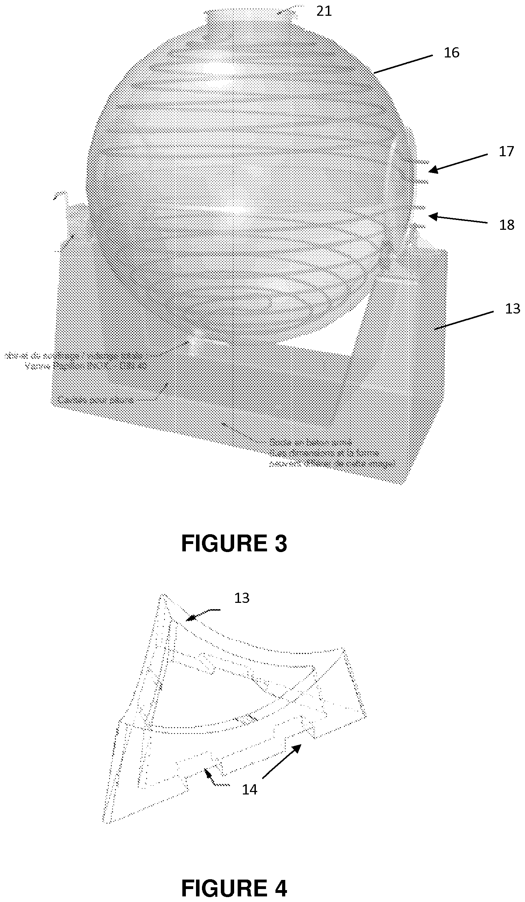

Ainsi, et comme illustré à la Fig. 3, cette cuve 10 étant montée en rotation autour d'un axe horizontal ou sensiblement horizontal passant par son centre, ces tubes 17, 18 s'étendent coaxialement avec cet axe de rotation. Ces tubes 17, 18 subissent ainsi seulement un mouvement de rotation et non un mouvement de translation lorsque cette cuve 10 est basculée. Il est ainsi plus simple de connecter ces tubes 17, 18 formant saillie du corps de la cuve 10 avec des objets externes à cette dernière. Les entrées de ces tubes 17, 18 sont ici reliées directement à un même point d'alimentation, ou de puisage, en fluide 19 de sorte qu'une même température d'entrée du fluide dans les deux tubes 17, 18 est assurée.

Cette cuve 10 comporte aussi une trappe frontale 20 ovale en acier inoxydable et une trappe d'accès ronde 21 placée à l'extrémité supérieure du corps de cuve 10. Bien entendu, cette trappe frontale 20 pourrait prendre toute autre forme et être, par exemple, ronde.

Cette cuve 10 comporte encore un robinet 22 de dégustation réalisé en acier inoxydable.

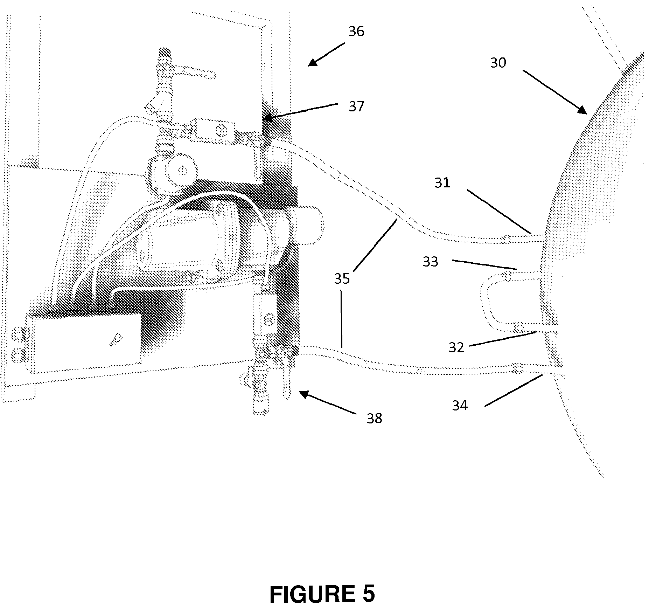

La Figure 5 est une représentation schématique d'une cuve sphérique 30 en béton selon un autre mode de réalisation de la présente invention.

Chaque hémisphère du corps de cette cuve comprend un unique tube pour la circulation d'un fluide de refroidissement et/ou d'un fluide chauffant.

L'extrémité d'entrée 31, 32 et l'extrémité de sortie 33, 34 de chaque tube font saillie de l'hémisphère correspondant.

L'extrémité de sortie 33 du tube de l'hémisphère supérieur est directement reliée à l'extrémité d'entrée 32 du tube de l'hémisphère inférieur de sorte que le corps de contenant est refroidi ou chauffé par le même fluide circulant dans ces tubes assurant une continuité de circulation de fluide dans le corps de la cuve.

L'extrémité d'entrée 31 du tube de l'hémisphère supérieur et l'extrémité de sortie 34 du tube de l'hémisphère inférieur sont par ailleurs reliées par des tubes flexibles 35 à un circuit 36 d'alimentation en fluide comportant un point de puisage de fluide 37 et un point d'extraction du fluide 38 ayant circulé dans le corps de cette cuve 30.

Il peut être avantageusement choisi de faire circuler le fluide en « eau perdue », par exemple dans le cas d'un fluide de refroidissement à partir de l'eau d'un puisard), ou en recyclage, par exemple dans le cas d'un fluide chauffant. Dans ce dernier cas, le fluide repasse dans un système apportant des colories pour maintenir continuellement la température du fluide chauffant requise pour chauffer ou maintenir le contenu de la cuve 30 à la température de consigne.

## Revendications

1. Contenant pour liquide alimentaire, notamment pour l'élaboration et l'élevage de vin et de spiritueux, ledit contenant comportant un ou plusieurs tubes (17, 18) pour la circulation d'un fluide de refroidissement et/ou d'un fluide chauffant, **caractérisé en ce que**
- ledit contenant comportant un corps de contenant qui est sphérique ou ovoïde, ledit corps comprenant une première moitié de corps (12) inférieure et une seconde moitié de corps (11) supérieure,
- chaque moitié de corps (11, 12) comprend un tube pour la circulation d'un fluide de refroidissement et/ou d'un fluide chauffant, chaque tube comprenant une extrémité d'entrée et une extrémité de sortie, au moins une desdites extrémités formant saillie de ladite moitié de corps (11, 12) correspondante, et **en ce que**
- les extrémités d'entrée desdits tubes (17, 18) sont reliées à un même point de puisage de fluide.

2. Contenant selon la revendication 1, **caractérisé en ce que** l'extrémité d'entrée du tube de chaque moitié de corps étant placée en saillie de sa moitié de corps correspondante, ces extrémités d'entrée sont reliées à un même point de puisage en fluide pour recevoir un même fluide.

3. Contenant selon la revendication 1, **caractérisé en ce que** l'extrémité d'entrée du tube d'une première moitié de corps est reliée à l'extrémité de sortie du tube de l'autre moitié de corps du contenant de sorte que ces tubes forment une continuité de tube entre les deux moitiés de corps pour la circulation d'un fluide provenant d'un même point de puisage en fluide, le corps de contenant étant ainsi refroidi ou chauffé par le même fluide circulant dans ces tubes (17, 18) ainsi connectés.

4. Contenant selon l'une quelconque des revendications 1 à 3, **caractérisé en ce que** chaque moitié de corps (11, 12) comporte un seul tube pour la circulation d'un fluide de refroidissement et/ou d'un fluide chauffant, de préférence, ces tubes (17, 18) étant identiques.

5. Contenant selon l'une quelconque des revendications précédentes, **caractérisé en ce que** chaque tube est enroulé en spirale.

6. Contenant selon l'une quelconque des revendications précédentes, **caractérisé en ce que** ledit contenant étant sphérique, les extrémités d'entrée et de sortie de chaque tube sont placées au niveau de la section équatoriale de sa moitié de corps (11, 12), ou hémisphère, correspondante.

7. Contenant selon l'une quelconque des revendications 1 à 6, **caractérisé en ce que** lesdits tubes (17, 18) sont intégrés dans l'épaisseur du corps du contenant.

8. Contenant selon l'une quelconque des revendications 1 à 6, **caractérisé en ce que** lesdits tubes (17, 18) sont agencés sur le corps du contenant pour assurer une température homogène de celui-ci.

9. Contenant selon l'une quelconque des revendications précédentes, **caractérisé en ce qu'**il comporte un ou plusieurs capteurs de température intégrés dans l'épaisseur du corps dudit contenant.

10. Contenant selon l'une quelconque des revendications précédentes, **caractérisé en ce qu'**il comporte un trou d'homme dans sa moitié de corps supérieure et une ouverture de décharge dans sa moitié de corps inférieure, lesdits tubes (17, 18) entourant ledit trou et ladite ouverture.

11. Contenant selon l'une quelconque des revendications précédentes, **caractérisé en ce que** lesdits tubes (17, 18) sont en polyéthylène réticulé.

12. Contenant selon l'une quelconque des revendications précédentes, **caractérisé en ce que** ledit corps de contenant comportant une paroi intérieure délimitant le volume de stockage dudit contenant et une paroi périphérique externe, ladite première moitié de corps (12) inférieure et ladite seconde moitié de corps (11) supérieure sont superposées et assemblées pour fermer ledit corps de contenant, chaque moitié de corps (11, 12) comprend une surface d'assemblage avec l'autre moitié de corps (11, 12), lesdites surfaces d'assemblage étant placées en regard l'une de l'autre, lesdites surfaces d'assemblage comportant au moins :
- des premières surfaces d'assemblage placées du côté de ladite paroi intérieure, lesdites premières surfaces présentant des profils conjugués l'un de l'autre pour assurer un contact continu entre lesdites premières surfaces, et
- lesdites premières surfaces d'assemblage étant prolongées en allant vers l'extérieur dudit contenant par des secondes surfaces d'assemblage configurées pour définir entre elles, un espace intérieur débouchant ou non sur ladite paroi périphérique externe.

13. Contenant selon la revendication 12, **caractérisé en ce qu'**il comporte deux moitiés de corps de contenant assemblées entre elles, chaque moitié de corps (11, 12) étant d'une seule pièce.

14. Contenant selon l'une quelconque des revendications précédentes, **caractérisé en ce qu'**il est en béton.

15. Ensemble comprenant un contenant selon l'une quelconque des revendications 1 à 14 et un socle (13) pour support le corps dudit contenant, ce socle ayant une section transversale triangulaire.

16. Ensemble comprenant un contenant selon l'une quelconque des revendications 1 à 14, ledit contenant comprenant au moins un dispositif de couplage solidaire de la paroi périphérique externe du corps de ce contenant, un dispositif d'entraînement en rotation de ce contenant, un ou plusieurs éléments de guidage en rotation dudit au moins un dispositif de couplage et une base pour supporter en rotation ledit contenant et recevoir ledit au moins un dispositif d'entraînement en rotation.

## Patentansprüche

1. Behälter für ein flüssiges Nahrungsmittel, insbesondere für die Herstellung und den Ausbau von Weinen und Spirituosen, wobei der Behälter eine oder mehrere Leitungen (17, 18) für die Zirkulation eines Kühlfluids und/oder eines Heizfluids umfasst, **dadurch gekennzeichnet, dass**
- der Behälter einen Behälterkörper umfasst, welcher kugelförmig oder eiförmig ist, wobei der Körper eine untere erste Körperhälfte (12) und eine obere zweite Körperhälfte (11) umfasst,
- jede Körperhälfte (11, 12) eine Leitung für die Zirkulation eines Kühlfluids und/oder eines Heizfluids umfasst, wobei jede Leitung ein Eingangsende und ein Ausgangsende umfasst, wobei wenigstens eines der Enden einen Vorsprung von der entsprechenden Körperhälfte (11, 12) bildet, und dadurch, dass
- die Eingangsenden der Leitungen (17, 18) an einem gleichen Entnahmepunkt des Fluids angeschlossen sind.

2. Behälter nach Anspruch 1, **dadurch gekennzeichnet, dass** das Eingangsende der Leitung von jeder Körperhälfte vorspringend von seiner entsprechenden Körperhälfte angeordnet ist, wobei die Eingangsenden an einem gleichen Fluid-Entnahmepunkt angeschlossen sind, um ein gleiches Fluid zu erhalten.

3. Behälter nach Anspruch 1, **dadurch gekennzeichnet, dass** das Eingangsende der Leitung von einer ersten Körperhälfte an dem Ausgangsende der Leitung der anderen Körperhälfte des Behälters derart angeschlossen ist, dass die Leitungen eine durchgehende Leitung zwischen den beiden Körperhälften für die Zirkulation eines Fluids bilden, welches von einem gleichen Fluid-Entnahmepunkt stammt, wobei der Körper des Behälters somit durch das gleiche Fluid gekühlt oder erwärmt wird, welches in den derart verbundenen Leitungen zirkuliert.

4. Behälter nach einem der Ansprüche 1 bis 3, **dadurch gekennzeichnet, dass** jede Körperhälfte (11, 12) eine einzelne Leitung für die Zirkulation eines Kühlfluids und/oder eines Heizfluids umfasst, wobei die Leitungen (17, 18) identisch sind.

5. Behälter nach einem der vorhergehenden Ansprüche, **dadurch gekennzeichnet, dass** jede Leitung spiralförmig gewickelt ist.

6. Behälter nach einem der vorhergehenden Ansprüche, **dadurch gekennzeichnet, dass** der Behälter kugelförmig ist, wobei die Eingangs- und Ausgangsenden von jeder Leitung auf der Höhe des Äquatorabschnitts ihrer entsprechenden Körperhälfte (11, 12) oder Halbkugel platziert sind.

7. Behälter nach einem der Ansprüche 1 bis 6, **dadurch gekennzeichnet, dass** die Leitungen (17, 18) in die Dicke des Körpers des Behälters integriert sind.

8. Behälter nach einem der Ansprüche 1 bis 6, **dadurch gekennzeichnet, dass** die Leitungen (17, 18) an dem Körper des Behälters angeordnet sind, um eine homogene Temperatur desselben sicherzustellen.

9. Behälter nach einem der vorhergehenden Ansprüche, **dadurch gekennzeichnet, dass** er einen oder mehrere Temperatursensoren umfasst, welche in der Dicke des Körpers des Behälters integriert sind.

10. Behälter nach einem der vorhergehenden Ansprüche, **dadurch gekennzeichnet, dass** er ein Mannloch in einer oberen Körperhälfte und eine Auslassöffnung in seiner unteren Körperhälfte umfasst, wobei die Leitungen (17, 18) das Loch und die Öffnung umgeben.

11. Behälter nach einem der vorhergehenden Ansprüche, **dadurch gekennzeichnet, dass** die Leitungen (17, 18) aus vernetztem Polyethylen bestehen.

12. Behälter nach einem der vorhergehenden Ansprüche, **dadurch gekennzeichnet, dass** der Körper des Behälters eine innere Wand umfasst, welche das Lagervolumen des Behälters begrenzt, sowie eine äußere Umfangswand, wobei die untere erste Körperhälfte (12) und die obere zweite Körperhälfte (11) überlagert und montiert sind, um den Körper des Behälters zu schließen, wobei jede Körperhälfte (11, 12) eine Montagefläche mit der anderen Körperhälfte (11, 12) umfasst, wobei die Montageflächen einander gegenüberliegend platziert sind, wobei die Montageflächen wenigstens umfassen:
- erste Montageflächen, welche an der Seite der inneren Wand platziert sind, wobei die ersten Flächen Profile aufweisen, welche aufeinander angepasst sind, um einen durchgehenden Kontakt zwischen den ersten Flächen sicherzustellen, und
- wobei die ersten Montageflächen in Richtung der Außenseite des Behälters verlaufend durch zweite Montageflächen verlängert sind, welche dazu eingerichtet sind, zwischen einander einen Innenraum zu definieren, welcher zu der äußeren Umfangswand mündet oder nicht.

13. Behälter nach Anspruch 12, **dadurch gekennzeichnet, dass** er zwei Körperhälften des Behälters umfasst, welche untereinander montiert sind, wobei jede Körperhälfte (11, 12) ein einzelnes Stück ist.

14. Behälter nach einem der vorhergehenden Ansprüche, **dadurch gekennzeichnet, dass** er aus Beton besteht.

15. Anordnung, umfassend einen Behälter nach einem der Ansprüche 1 bis 14 und einen Sockel (13) zum Tragen des Körpers des Behälters, wobei der Sockel einen dreieckigen Querschnitt aufweist.

16. Anordnung, umfassend einen Behälter nach einem der Ansprüche 1 bis 14, wobei der Behälter wenigstens eine Kopplungsvorrichtung, welche an der äußeren Umfangswand des Körpers des Behälters angebracht ist, eine Vorrichtung zum Antreiben des Behälters in Rotation, ein oder mehrere Elemente zum Führen der wenigstens einen Kopplungsvorrichtung in Rotation und eine Basis zum Tragen des Behälters in Rotation und Aufnehmen der wenigstens einen Vorrichtung zum Antreiben in Rotation umfasst.

## Claims

1. A beverage container, in particular for preparing and ageing wine and spirits, said container including one or more tube(s) (17, 18) for the circulation of a cooling fluid and/or a heating fluid, **characterised in that**
- said container including a container body which is spherical or ovoid, said body comprising a lower first body half (12) and an upper second body half (11),
- each body half (11, 12) comprises a tube for the circulation of a cooling fluid and/or a heating fluid, each tube comprising an inlet end and an outlet end, at least one of said ends projecting from said corresponding body half (11, 12), and **in that**
- the inlet ends of said tubes (17, 18) are connected to the same fluid draw-off point.

2. The container according to claim 1, **characterised in that** the inlet end of the tube of each body half being placed projecting from its corresponding body half, these inlet ends are connected to the same fluid draw-off point to receive the same fluid.

3. The container according to claim 1, **characterised in that** the inlet end of the tube of a first body half is connected to the outlet end of the tube of the other body half of the container so that these tubes form a tube continuity between the two body halves for the circulation of a fluid originating from the same fluid draw-off point, the container body thereby being cooled or heated by the same fluid circulating in these tubes (17, 18) thus connected.

4. The container according to any one of claims 1 to 3, **characterised in that** each body half (11, 12) includes one single tube for the circulation of a cooling fluid and/or a heating fluid, preferably, these tubes (17, 18) being identical.

5. The container according to any one of the preceding claims, **characterised in that** each tube is spirally wound.

6. The container according to any one of the preceding claims, **characterised in that** said container being spherical, the inlet and outlet ends of each tube are placed at the equatorial section of its corresponding body half (11, 12), or hemisphere.

7. The container according to any one of claims 1 to 6, **characterised in that** said tubes (17, 18) are embedded in the thickness of the body of the container.

8. The container according to any one of claims 1 to 6, **characterised in that** said tubes (17, 18) are arranged over the body of the container to ensure a uniform temperature thereof.

9. The container according to any one of the preceding claims, **characterised in that** it includes one or more temperature sensor(s) embedded the thickness of the body of said container.

10. The container according to any one of the preceding claims, **characterised in that** it includes a manhole in its upper body half and a discharge opening in its lower body half, said tubes (17, 18) surrounding said manhole and said opening.

11. The container according to any one of the preceding claims, **characterised in that** said tubes (17, 18) are made of crosslinked polyethylene.

12. The container according to any one of the preceding claims, **characterised in that** said container body including an internal wall delimiting the storage volume of said container and an outer peripheral wall, said lower first body half (12) and said upper second body half (11) are superimposed and assembled so as to close said container body, each body half (11, 12) comprises a surface for assembly with the other body half (11, 12), said assembly surfaces being placed opposite each other, said assembly surfaces including at least:
- first assembly surfaces placed on the side of said internal wall, said first surfaces having profiles matching each other to ensure a continuous contact between said first surfaces, and
- said first assembly surfaces being extended outwardly of said container by second assembly surfaces configured to define therebetween, an internal space opening, or not, onto said outer peripheral wall.

13. The container according to claim 12, **characterised in that** it includes two container body halves assembled together, each body half (11, 12) being made in one-piece.

14. The container according to any one of the preceding claims, **characterised in that** it is made of concrete.

15. An assembly comprising a container according to any one of claims 1 to 14 and a stand (13) for supporting the body of said container, this stand having a triangular cross-section.

16. The assembly comprising a container according to any one of claims 1 to 14, said container comprising at least one coupling device secured to the outer peripheral wall of the body of this container, a device for driving this container in rotation, one or more rotational guide element(s) of said at least one coupling device and a base for supporting said container in rotation and receiving said at least one rotational drive device.
